# EUROPEAN PATENT SPECIFICATION

(11) **EP 2 331 467 B1**
(45) Date of publication and mention of the grant of the patent: **13.06.2012**
(21) Application number: 09783317.2
(22) Date of filing: 23.09.2009
(51) Int. Cl.: C02F 1/00

(54) **REPLACEABLE CARTRIDGE TYPE FILTERING SYSTEM**
FILTERSYSTEM MIT AUSTAUSCHBARER KARTUSCHE
SYSTÈME DE FILTRAGE DU TYPE À CARTOUCHE REMPLAÇABLE

(30) Priority: 24.09.2008 IT PD20080270
(43) Date of publication of application: 15.06.2011
(73) Proprietor: Struttura S.r.L., 36021 Barbarano Vicentino (VI) (IT)
(72) Inventor: IOVERNO, Francesco, I-36100 Vicenza (IT)
(74) Representative: Cantaluppi, Stefano
(86) International application number: PCT/EP2009/062312
(87) International publication number: WO 2010/034735

(56) References cited:
- US-A1- 2007 246 421

## Description

### Technical field

The invention relates to a filtering system of the type having a replaceable cartridge for filtering devices of the percolation type.

### Technological background

Filtering devices, and in particular percolating filtering jug devices, involve the problem of keeping the filtering material moist in order to extend the service-life thereof.

A filtering system provided for this purpose is, for example, described in GB2197647. That document proposes a jug of the replaceable filtering cartridge type positioned in a through-passage between an upper bowl and a lower bowl which are intended to receive the water to be filtered and the filtered water, respectively.

The cartridge can be provided with a cup which is fitted in a sealing manner to the outer surface so as to provide a channel which extends along the outer surface of the cartridge in order to terminate at an intermediate position between the cover and the base thereof. The raising of the outlet of the cartridge with respect to the base thereof keeps the filtering material moist even when there is no flow of water to be filtered.

US2007/0246421 discloses an apparatus for filtering liquids including a hopper in which a filtering cartridge is removably nested.

The hopper is provided with throttling means cooperating with an outflow portion of the cartridge for adjusting the flow of filtered liquid from the cartridge during use.

A drawback of the apparatus according to US2007/0246421 is that for regulating the outflow from the cartridge, it is necessary to couple the cartridge with a suitable hopper provided with throttling means.

An object of this invention is also to combine, with the moistening function set out above, a function of regulating the filtering capacities of the cartridge, particularly for cartridges of elongate oval shape, in which there are provided two or more discharge apertures for the filtrate which are spaced apart from each other.

Another object of the invention is to construct a filtering system which is suitable for production which is particularly effective and, at the same time, can be carried out with limited modifications to the normal production line.

### Statement of invention

These objects are achieved by the invention by means of a filtering system constructed in accordance with the appended claims.

### Brief description of the drawings

The features and advantages of the invention will be better appreciated from the detailed description of one preferred embodiment thereof which is illustrated by way of non-limiting example with reference to the appended drawings, in which:
- Figure 1 is a schematic cross-section of a filtering device comprising a replaceable cartridge type filtering system according to the invention;
- Figure 2 is a front section of the filtering system of Figure 1;
- Figure 3 is a partially exploded view of the front section of Figure 2;
- Figure 4 is a cross-section of the cartridge system taken in the plane IV-IV of Figure 2;
- Figure 5 is a perspective view of a detail of the cartridge type system of Figure 2;
- Figure 6 is a plan view of the cartridge type system of Figure 2;
- Figure 7 is a front section of a construction variant of the cartridge type system according to the invention;
- Figure 8 is an exploded view of the cartridge of Figure 7.

### Preferred embodiment of the invention

With reference to the Figures, there is generally designated 1 a replaceable cartridge type filtering system (otherwise referred to as a "cartridge" for the sake of brevity) for a percolating filtering device 10 for filtering water for domestic use. Filtering systems of this type are used in jugs for purifying drinking water, in coffee maker and teapots, and in kettles.

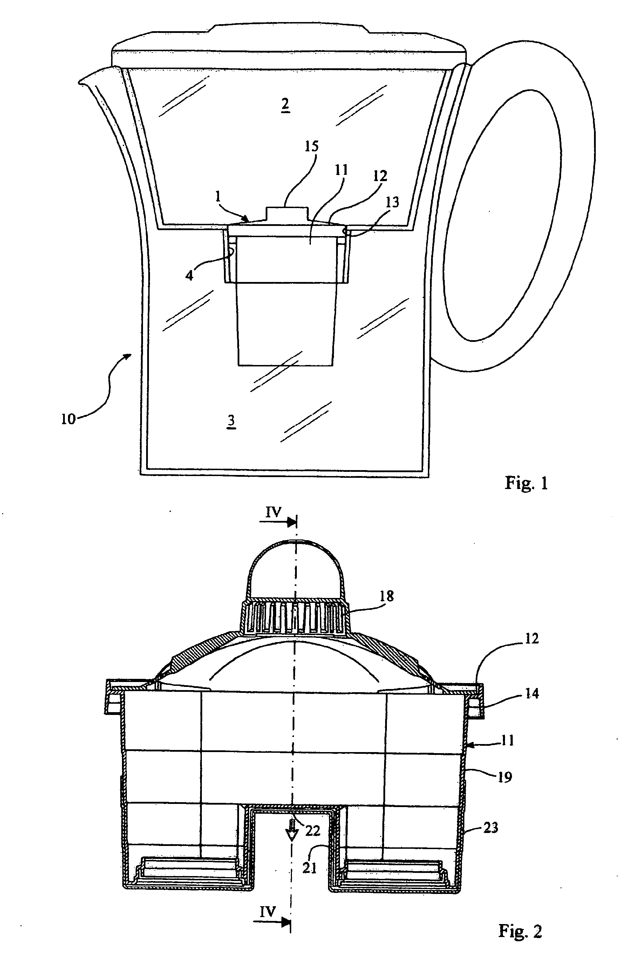

In particular, the device illustrated in Figure 1 is of the jug type, having an upper bowl 2 and a lower bowl 3 which communicate by means of gravitational force through a passage 4, in which the cartridge 1 is removably inserted. The cartridge 1 is sealingly engaged with a lip type seal 14 thereof on a seat 13 which is formed at the aperture of the passage 4 so that all the water contained in the upper bowl 2 has to pass through the cartridge 1 in order to flow into the lower bowl 3.

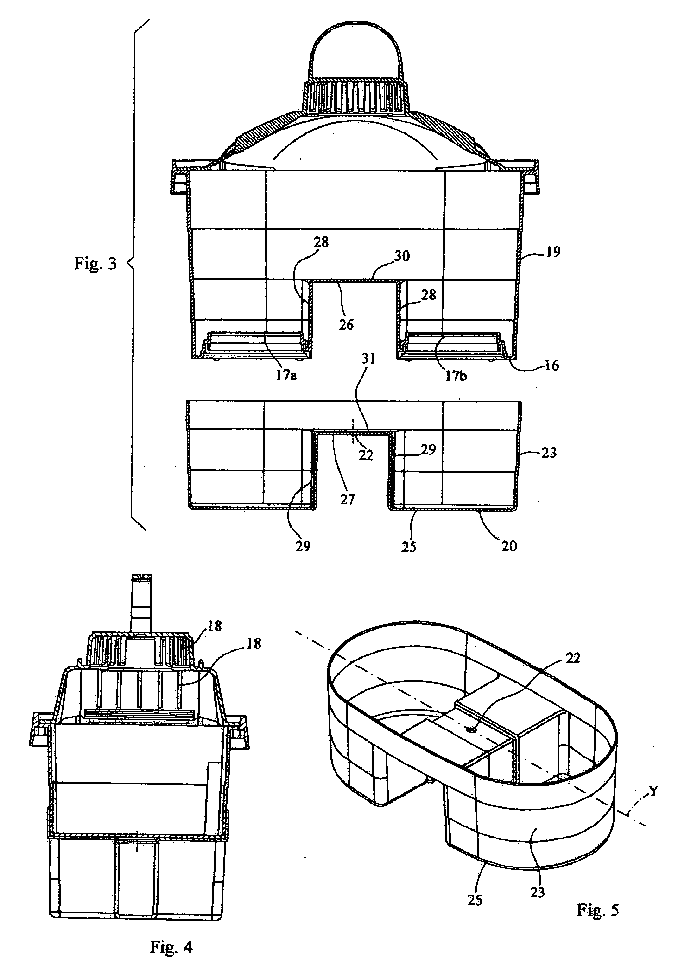

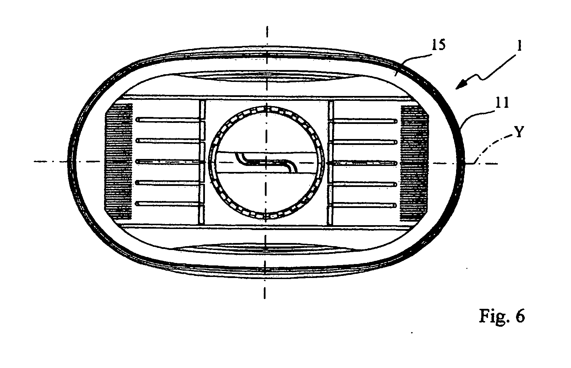

The cartridge 1, which is shown in a first embodiment thereof illustrated in Figures 2 to 6, comprises a container 11 which is for the filtering material and which is of elongate form when viewed from above (Figure 6) in a prevailing longitudinal direction Y.

The container 11 is provided with an upper opening 12, along the edge of which there is defined the lip type seal 14.

The opening 12, which is directed towards the upper bowl 2 when the cartridge 1 is engaged in the seat 13, is closed by means of a cover 15, in which there is provided a plurality of openings 18 for the intake of the water to be filtered.

All the openings 18 for the water to be filtered are located above the filtering material so that all the water to be filtered is made to flow through the whole filtering material provided in the container 11.

This allows high filtration quality to be obtained.

This also assures that the water to be filtered flows through all the different layers of the filtering material when the filtering material is arranged in different layers superimposed to one another.

In the above case, it is particularly important that the water passes through all layers in order to be properly treated.

The container 11 has a base 16 with at least two discharging apertures 17a,b for the filtered liquid. The discharging apertures 17a,b are formed in the base 16 in positions mutually spaced-apart in the longitudinal direction Y.

The container 11 is provided with a lateral wall 19 which extends from the edge of the upper aperture 12 to the base 16.

The cartridge 1 comprises a bowl 20 which is for collecting the filtered liquid and which is positioned outside the container 11 and is secured thereto by means of a fluid-tight connection which is brought about between the lateral wall 19 of the container 11 and a corresponding lateral wall 23 of the collecting bowl 20. The sealing between the lateral walls 19, 23 is brought about by an interference-fit connection between the walls themselves. According to a possible construction variant of the invention which is not illustrated in the appended Figures, the sealing between the lateral walls 19, 23 is brought about by snap-fit means and counter-means which are provided on the walls themselves. The collecting bowl 20 is further provided with a base 25. There is further provision for the collecting bowl to be able to be joined or bonded in the contact zone with the lateral wall of the container 11.

When the collecting bowl 20 is connected to the container 11, the bases 16, 25 are facing each other and the lateral wall 23 extends as far as an intermediate height of the lateral wall 19, between the aperture 12 and the bases 16, 25.

The container 11 and the collecting bowl 20 comprise recesses 26, 27 which are conjugate with respect to each other and which are formed in the bases 16, 25 in an intermediate position between the discharging apertures 17a,b. The recesses 26, 27 are provided with lateral walls 28, 29 and tops 30, 31. There is defined, between the container 11 and the collecting bowl 20, a fluid passage 21 which extends along the lateral walls 28, 29 as far as the tops 30, 31 of the recesses 26, 27. The passage 21 connects the discharging apertures 17a,b to each other.

An outlet aperture 22 for the filtered liquid from the cartridge 1 is formed at an intermediate position of the passage between the discharging apertures 17a,b at the top 31 of the recess 27 of the collecting bowl 20. The outlet aperture 22 has a calibrated cross-section which overall is less than the minimal cross-section of the passage 21 and which is sized so as to regulate the flow of water being discharged from the passage 21 and, consequently, the time spent by the water to be filtered in the container 11 in contact with the filtering material.

The outlet aperture is conveniently a calibrated hole 22, defined in the wall of the passage 21.

The provision of the calibrated hole 22 allows the outflow of water to be very precisely controlled, and laminar flow condition to be fulfilled, thus improving the operation of the filtering cartridge 1.

Moreover, since the calibrated hole 22 is obtained in the wall of the passage 21, no stagnation occurs in the passage 21.

Therefore, by using the filtering system of the invention, very hygienic conditions of the filtered water are assured.

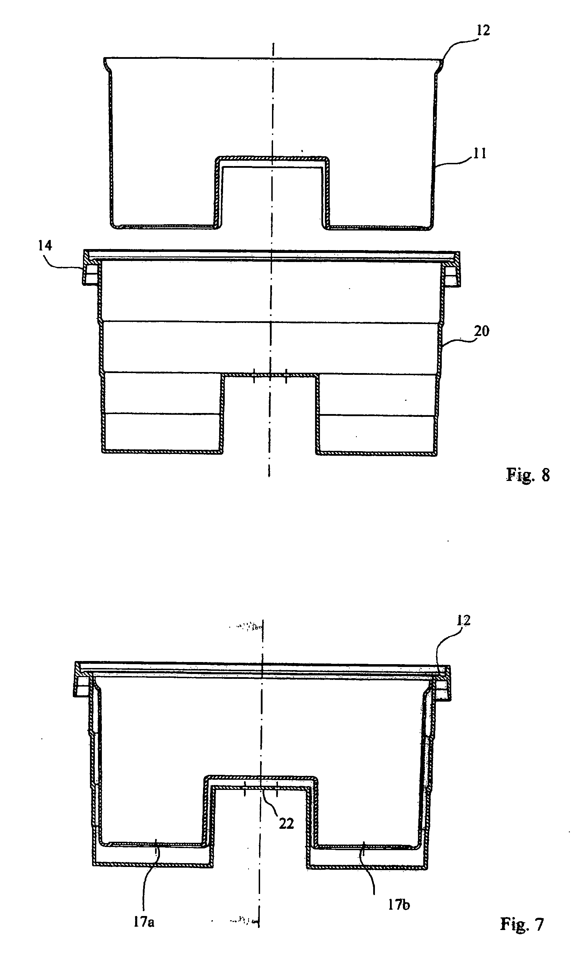

In a second embodiment illustrated in Figures 7 and 8, the container 11 and the collecting bowl 20 both extend from the cover 15 as far as the bases 16, 25 so that the sealing connection therebetween is brought about at the upper aperture 12, respectively. In that construction variant, the lip type seal is formed on the collecting bowl 20. The variant described herein makes the cartridge 1 structurally more simple, because the connection between each of the lateral walls 19, 23 of the container 11 and the collecting bowl 20 occurs at the upper edges.

In both above-described cases, with the outlet aperture 22 being positioned at an intermediate height between the discharging apertures 17a,b and the aperture 12 of the container 11, the filtering material between that intermediate height and the base 16 of the container 11 is kept moist, thereby extending the service-life thereof.

At the same time, owing to suitable dimensions of the passage 21 and the outlet aperture 22, i.e. the calibrated hole, the cartridge 1 combines the function of regulating the filtering capacities with the moistening function.

The filtering system obtained in this manner is particularly effective and at the same time can be produced with limited modifications to the normal production line. Therefore, the invention solves the problem set out with reference to the cited prior art.

A further advantage of the invention is that the whole amount of filtered water is made to pass through the whole amount of filtering material, because no side inlet in the cartridge walls are required for the cartridge to perform a complete filtration of the water poured in the hopper. Therefore, filtration is accurate for any level of water in the hopper.

This also is particularly effective for those cartridges in which the filtering bed is made of different layers superimposed to one another and it is important that the water passes through all layers to be properly treated.

## Claims

1. A filtering system (1) having a replaceable cartridge, comprising a container (11) for the filtering material having a base (16) with at least two discharging apertures (17a, 17b) for discharging the filtered liquid, the discharging apertures (17a, 17b) being formed in the base (16) in mutually spaced-apart positions, the system comprising a collecting bowl (20) for the filtered liquid, which bowl (20) is positioned at the outer side of the container (11) and is connected to the container (11) in a fluid-tight manner, wherein a fluid passage (21) is defined between the container (11) and the collecting bowl (20), the fluid passage (21) connects the discharging apertures (17a, 17b) to each other and in which an outlet aperture (22) for the filtered liquid from the cartridge (1) is formed in the collecting bowl (20) in an intermediate position of the fluid passage (21) between the discharging apertures (17a, 17b), the outlet aperture including a calibrated hole (22) having a cross-section which is generally smaller than the minimum cross-section of the passage (21).

2. A filtering system according to claim 1, wherein the container (11) for the filtering material and the collecting bowl (20) each comprise a lateral wall (19, 23) and the fluid-tight connection between the container (11) and the collecting bowl (20) is brought about at the lateral walls (19, 23).

3. A filtering system according to claim 2, wherein the lateral wall (23) of the collecting bowl (20) extends as far as an intermediate height of the lateral wall (19) of the container (11).

4. A filtering system according to claim 1, wherein the collecting bowl (20) and the container (11) for the filtering material each comprise a corresponding recess (26, 27) which is formed in the corresponding base (16, 25), the recesses (26, 27) being joined, and the fluid passage (21) extending along corresponding walls (28, 29) of each of the recesses (26, 27) as far as the top (30, 31) thereof, the outlet aperture (22) being formed at the top (31) of the recess (27) formed in the collecting bowl (20).

5. A filtering system according to any one of the preceding claims, wherein the container (11) and the collecting bowl (20) are of elongate form in a prevailing longitudinal direction (Y) when viewed from above.

6. A filtering system according to any one of the preceding claims, wherein the cartridge (1) has at least one inlet opening (12, 18) for the water to be filtered, wherein all the openings (12, 18) are located above the filtering material, so that the water to be filtered is made to pass through the whole filtering material.

7. A percolating filtering device comprising a filtering cartridge system (1) according to any one or more of the preceding claims.

## Patentansprüche

1. Filtersystem (1) mit einer austauschbaren Patrone mit einem Behälter (11) für das Filtermaterial, der eine Basis (16) mit zumindest zwei Abgabeöffnungen (17a, 17b) zur Abgabe der gefilterten Flüssigkeit aufweist, wobei die Abgabeöffnungen (17a, 17b) in der Basis (16) in gegenseitigen, voneinander getrennten Positionen ausgebildet sind, wobei das System eine Sammelschale (20) für die gefilterte Flüssigkeit aufweist, dessen Schale (20) an der äußeren Seite des Behälters (11) positioniert und mit dem Behälter (11) in flüssigkeitsdichter Weise verbunden ist, wobei eine Flüssigkeitsleitung (21) zwischen dem Behälter (11) und der Sammelschale (20) gebildet ist, wobei die Flüssigkeitsleitung (21) die Abgabeöffnungen (17a, 17b) miteinander verbindet und in der eine Auslassöffnung (22) für die gefilterte Flüssigkeit von der Patrone (1) in der Sammelschale (20) in einer mittleren Position der Flüssigkeitsleitung (21) zwischen den Abgabeöffnungen (17a, 17b) ausgebildet ist, wobei die Auslassöffnung eine kalibrierte Öffnung (22) mit einem Querschnitt umfasst, der üblicherweise kleiner als der minimale Querschnitt der Leitung (21) ist.

2. Filtersystem gemäß Anspruch 1, wobei der Behälter (11) für das Filtermaterial und die Sammelschale (20) jeweils eine seitliche Wand (19, 23) aufweisen und die flüssigkeitsdichte Verbindung zwischen dem Behälter (11) und der Sammelschale (20) an den seitlichen Wänden (19, 23) ausgeführt wird.

3. Filtersystem gemäß Anspruch 2, wobei sich die seitliche Wand (23) der Sammelschale (20) bis zu einer mittleren Höhe der seitlichen Wand (19) des Behälters (11) erstreckt.

4. Filtersystem gemäß Anspruch 1, wobei die Sammelschale (20) und der Behälter (11) für das Filtermaterial jeweils eine jeweilige Aussparung (26, 27) aufweisen, die in der jeweiligen Basis (16, 25) ausgebildet ist, wobei die Aussparungen (26, 27) verbunden sind und sich die Flüssigkeitsleitung (21) entlang der jeweiligen Wände (28, 29) von jeder der Aussparungen (26, 27) bis zur Spitze (30, 31) davon erstrecken, wobei die Auslassöffnung (22) an der Spitze (31) der Aussparung (27), die in der Sammelschale (20) ausgebildet ist, ausgebildet ist.

5. Filtersystem gemäß einem der vorhergehenden Ansprüche, wobei der Behälter (11) und die Sammelschale (20) eine verlängerte Form in eine überwiegende Längsrichtung (Y) ausweisen, wenn man sie von oben sieht.

6. Filtersystem gemäß einem der vorhergehenden Ansprüche, wobei die Patrone (1) zumindest eine Einlassöffnung (12, 18) für das zu filternde Wasser aufweist, wobei alle Öffnungen (12, 18) oberhalb des Filtermaterials angeordnet sind, so dass das zu filternde Wasser durch das gesamte Filtermaterial hindurchgehen muss.

7. Eine Perkolationsfiltervorrichtung mit einem Filterpatronensystem (1) gemäß einem oder mehreren der vorhergehenden Ansprüche.

## Revendications

1. Système filtrant (1) ayant une cartouche remplaçable, comprenant un conteneur (11) pour le matériau filtrant ayant une base (16) avec au moins deux ouvertures de décharge (17a, 17b) pour décharger le liquide filtré, les ouvertures de décharge (17a, 17b) étant formées dans la base (16) dans des positions mutuellement écartées, le système comprenant une cuve de collecte (20) pour le liquide filtré, ladite cuve (20) étant positionnée du côté extérieur du conteneur (11) et étant connectée au conteneur (11) d'une manière étanche aux fluides, dans lequel un passage à fluide (21) est défini entre le conteneur (11) et la cuve de collecte (20), le passage à fluide (21) connecte les ouvertures de décharge (17a, 17b) l'une à l'autre, et dans lequel une ouverture de sortie (22) pour le liquide filtré venant de la cartouche (1) est formée dans la cuve de collecte (20) dans une position intermédiaire du passage à fluide (21) entre les ouvertures de décharge (17a, 17b), l'ouverture de sortie incluant un trou calibré (22) ayant une section transversale qui est généralement plus petite que la section transversale minimum du passage (21).

2. Système filtrant selon la revendication 1, dans lequel le conteneur (11) pour le matériau filtrant et la cuve de collecte (20) comprennent chacun une paroi latérale (19, 23), et la connexion étanche aux fluides entre le conteneur (11) et la cuve de collecte (20) est assurée au niveau des parois latérales (19, 23).

3. Système filtrant selon la revendication 2, dans lequel la paroi latérale (23) de la cuve de collecte (20) s'étend aussi loin qu'une hauteur intermédiaire de la paroi latérale (19) du conteneur (11).

4. Système filtrant selon la revendication 1, dans lequel la cuve de collecte (20) et le conteneur (11) pour le matériau filtrant comprennent chacun un évidement correspondant (26, 27) qui est formé dans la base correspondante (16, 25), les évidements (26, 27) étant réunis, et le passage à fluide (21) s'étendant le long de parois correspondantes (28, 29) de chacun des évidements (26, 27) aussi loin que le sommet (30, 31) de ceux-ci, l'ouverture de sortie (22) étant formée au sommet (31) de l'évidement (27) formé dans la cuve de collecte (20).

5. Système filtrant selon l'une quelconque des revendications précédentes, dans lequel le conteneur (11) et la cuve de collecte (20) ont une forme allongée dans une direction longitudinale principale (Y) lorsqu'on les voit du dessus.

6. Système filtrant selon l'une quelconque des revendications précédentes, dans lequel la cartouche (1) possède au moins une ouverture d'entrée (12, 18) pour l'eau à filtrer, dans lequel toutes les ouvertures (12, 18) sont situés au-dessus du matériau filtrant, de sorte que l'eau à filtrer est amenée à passer à travers la totalité du matériau filtrant.

7. Dispositif filtrant à percolation comprenant un système à cartouche filtrante (1) selon l'une quelconque ou plusieurs des revendications précédentes.
